# EUROPÄISCHE PATENTSCHRIFT

(11) **EP 2 214 896 B1**
(45) Veröffentlichungstag und Bekanntmachung des Hinweises auf die Patenterteilung: **26.01.2011**
(21) Anmeldenummer: 07856014.1
(22) Anmeldetag: 21.11.2007
(51) Int. Cl.: B29D 29/06, B32B 27/12, B65G 15/34

(54) **VERFAHREN ZUM HERSTELLEN EINES TRANSPORT-/ANTRIEBSBANDES**
METHOD FOR PRODUCING A TRANSPORT/DRIVE BELT
PROCÉDÉ DE FABRICATION D'UNE BANDE TRANSPORTEUSE/D'ENTRAÎNEMENT

(43) Veröffentlichungstag der Anmeldung: 11.08.2010
(73) Patentinhaber: FORBO SIEGLING GMBH, 30179 Hannover (DE)
(72) Erfinder: HOFFMANN, Dieter, DE-31275 Lehrte/Aligse (DE); KÄMPER, Thomas, 30938 Burgwedel (DE)
(74) Vertreter: Scheffler, Jörg
(86) Internationale Anmeldenummer: PCT/DE2007/002111
(87) Internationale Veröffentlichungsnummer: WO 2009/065367

(56) Entgegenhaltungen:
- EP-A- 1 129 966
- WO-A-95/11795
- GB-A- 733 338

## Beschreibung

Die Erfindung betrifft ein Verfahren zum Herstellen eines Transport-/Antriebsbandes aus zumindest einer Lage eines thermoplastischen Materials und zumindest einer Lage aus einer Gewebebahn.

Derartige in der Regel flache Bänder finden als Fördergurte oder auch als Treibriemen eine vielfache Anwendung. Hierbei unterliegen insbesondere die Ränder an den Längskanten der ausgedehnten Bänder einer hohen mechanische Belastung und Beanspruchung bei der Verwendung, sodass oftmals die Randkanten des Bandes mit zunehmender Einsatzdauer gegenüber Umgebungseinflüssen ungeschützt sind und Schmutzpartikel ebenso wie Keime eindringen können. Dies ist insbesondere unter dem Aspekt der guten Hygienepraxis und dem HACCP-Konzept (Hazard Analysis and Critical Control Point) in allen Unternehmensbereichen nicht akzeptabel, die mit der Produktion, der Verarbeitung und dem Vertrieb von Lebensmitteln beschäftigt sind.

Aus der DE 1 237 768 ist ein Herstellverfahren für Förderbänder bekannt, bei dem um eine Kante eines Bandes ein Trägerstreifen mit einem daran angeklebten Materialstreifen herangeführt und umgelegt wird. Anschließend wird das Elastomer des Materialstreifens durch Andrücken beheizter Platten an der Ober- und Unterseite des Förderbandes aufgeschmolzen und verformt. Das Grundprinzip bei diesem Verfahren besteht darin, zusätzliches Elastomermaterial an der Kante des Förderbandes anzubringen und durch Temperatur- und Druckeinwirkung mit dem Elastomermaterial des Förderbandes zu einer Einheit zu verbinden.

In der DE 1 289 300 ist ein Fördergurt offenbart, der einen zugfesten Kern aus mehreren durch Verbindungsschichten aus thermoplastischen Material verbundenen Gewebeeinlagen aufweist. Die Kettfäden der Gewebeeinlage bestehen in den Randzonen des Gewebes aus einem thermoplastischen Material, das unter Temperatur und Druckeinwirkung aufschmilzt und sich mit dem thermoplastischen Material der Verbindungsschichten zu einer Einheit verbindet. Diese thermoplastischen Kettfäden weisen jedoch eine geringe Zugfestigkeit auf, sodass sie in der Praxis unerwünscht sind. Derartige Kettfäden werden daher oftmals nur in bestimmten Abständen eingesetzt, sodass der Rand in diesem Bereich abgetrennt werden kann, was allerdings eine flexible Konfektionierung weitestgehend ausschließt.

In der GB 1,030,354 und der US 5,244,083 werden Verfahren beschrieben, bei denen Förderbänder aus mehreren Lagen bestehen, die an den Randbereichen unterschiedliche Breiten aufweisen. Die breiteste Randlage wird dabei um die anderen Materiallagen herum geklappt. Bei den derart hergestellten Bändern ist jedoch ein Aufblättern und Ausfransen der mehrlagigen Struktur weiterhin möglich.

Vor diesem Hintergrund liegt der Erfindung die Aufgabe zu Grunde, eine Möglichkeit zu schaffen, ein Transport-/Antriebsband mit versiegelter und belastbarer Kante in einfacher und kostengünstiger Weise bereit zu stellen.

Diese Aufgabe wird erfindungsgemäß mit einem Verfahren gemäß den Merkmalen des Anspruchs 1 gelöst.

Die weitere Ausgestaltung der Erfindung ist den Unteransprüchen zu entnehmen.

Bei einem Herstellverfahren der Eingangs beschriebenen Art ist erfindungsgemäß vorgesehen, dass an zumindest einer Längskante des Transport-/Antriebsbandes eine Matte angelegt wird, um Wärme und/oder Druck auf das Transport-/Antriebsband zu übertragen, sodass ausschließlich das thermoplastische Material des Transport-/Antriebsbandes ohne Zusatzmaterial zumindest bereichsweise aufgeschmolzen und umgeformt wird, und anschließend nach einem Wiedererstarren des thermoplastischen Materials die Matte von der Längskante des Transport-/Antriebsbandes gelöst wird.

Der Kern der vorliegenden Erfindung besteht darin, dass der bereits vorhandene thermoplastische Werksstoff der insbesondere mehreren Bandlagen, beispielsweise PVC, PU, PE, PA, PP oder Polyolefine, zu einer einheitlichen und versiegelten Bandkante verformt wird. Ein Materialabtrag bzw. ein Anbringen zusätzlichen Materials ist daher nicht erforderlich. Bei dem derartig hergestellten Transport-/Antriebsband bildet der wiedererstarrte Werkstoff an der Kante eine Einheit, sodass ein Auftrennen und sich Lösen der mehreren Lagen nicht möglich ist.

Um die Zugfestigkeit, die im Wesentlichen von den Materialeigenschaften der Gewebeeinlage bestimmt wird, nicht zu beeinträchtigen ist erfindungsgemäß vorgesehen, dass die Schmelztemperatur des Materials der Gewebebahn höher als die Schmelztemperatur des thermoplastischen Materials ist.

Bevorzugt erfolgt bei einem erfindungsgemäßen Herstellverfahren das Aufschmelzen und Umformen des thermoplastischen Materials in einem Temperaturbereich zwischen 120°C und 200°C, bevorzugter in einem Temperaturbereich zwischen 160°C und 180°C.

Um ein Anhaften des thermoplastischen Materials im geschmolzenen und/oder wiedererstarrten Zustand zuverlässig zu verhindern, kann zwischen dem Transport-/Antriebsband und der Matte während der Ausführung des erfindungsgemäßen Verfahrens ein Trennmedium, beispielsweise ein Trennpapier oder eine Trennfolie, vorgesehen werden.

Damit die verformte Kantenoberfläche eine gewünschte Oberflächenstruktur aufweist, beispielsweise mit einer rauhen/glatten bzw. matten/glänzenden Eigenschaft, kann das Trennmedium mit einer Oberflächenstruktur versehen werden, die beim Aufschmelzen und Umformen der Oberfläche des thermoplastischen Materials aufgeprägt wird.

In vorteilhafter Weise ist bei einem erfindungsgemäßen Verfahren die Matte als Glasfasermatte ausgebildet.

Das Lösen der Matte von dem umgeformten Band erfolgt in Verbindung mit dem Trennmedium komplikationslos, wenn die Matte ein antihaftbeschichtetes Gewebe aufweist.

Die Erfindung lässt verschiedene Ausführungsformen zu. Nachfolgend wird das Grundprinzip des erfindungsgemäßen Verfahrens anhand einer Ausführungsform unter Bezug auf die beigefügten Figuren beispielhaft näher erläutert. Diese zeigen in
- Figur 1: schematisch skizziert eine Querschnittsdarstellung eines aus mehreren Lagen zusammengesetzten Transport-/Antriebsbandes vor dem Schmelz- und Umformvorgang;
- Figur 2: das Transport-/Antriebsband mit einer erfindungsgemäß umgeformten Längskante.

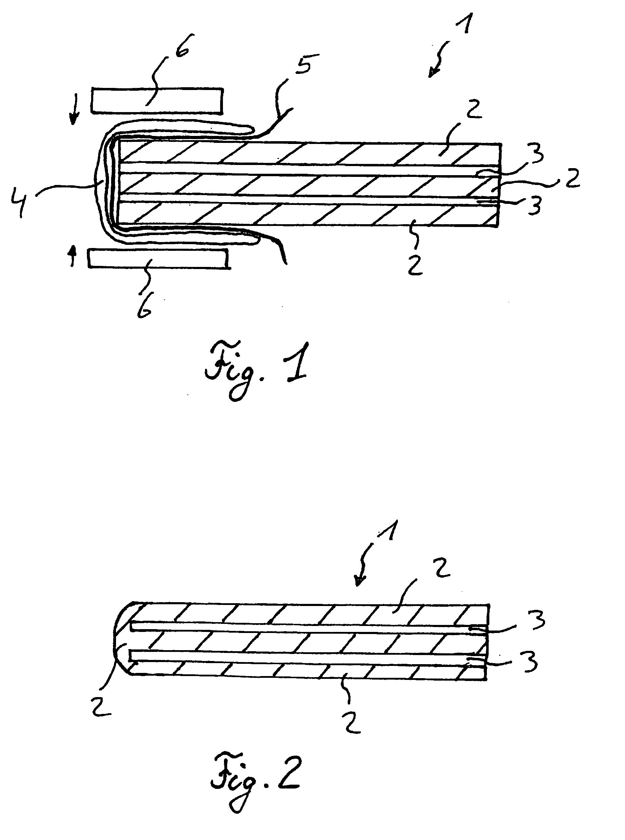

In der Darstellung der Figur 1 ist ein Transport-/Antriebsband 1 gezeigt, das mehrere Lagen thermoplastischen Materials 2 aufweist, die im Wesentlichen parallel und übereinander angeordnet sind. Zwischen jeweils zwei Lagen thermoplastischen Materials 2, beispielsweise Polyvinylchlorid, Polyurethan, Polyethylen, Polyamid, Polypropylen und/oder ein Polyolefin, ist eine Gewebebahn 3 als Zwischenlage eingefügt. Zur Vereinfachung der Darstellung sind die einzelnen Fäden, d.h. die Schuss- bzw. Kettfäden der Gewebebahn 3 nicht separiert eingezeichnet. Wesentlich ist hierbei, dass sie nicht über das thermoplastische Material 2 hinausragen.

Um eine der beiden Kanten des Transport-/Antriebsbandes 1, in der Zeichnungsebene die linke Kante, ist eine sack- bzw. taschenförmig ausgebildete Matte 4 herangeführt und um die Bandkante herumgelegt. Zwischen der Matte 4 und dem thermoplastischen Material 2 des Transport-/Antriebsbandes 1 ist ein Trennpapier 5 angeordnet, welches ebenfalls um die gesamte Kante von einer Oberseite zur Unterseite herumgeführt ist.

Für den eigentlichen Umformvorgang werden an die Oberseite und die Unterseite der Anordnung aus Transport-/Antriebsband 1, Trennpapier 5 und Matte 4 zwei Heizplatten 6 angelegt. Mittels der Heizplatten 6 wird an die vorstehend beschriebene Anordnung eine Temperatur- und/oder Druckeinwirkung übertragen. Die Temperatur ist dabei derart gewählt, dass zwar das thermoplastische Material 2 in dem Kantenbereich aufgeschmolzen wird, die Gewebebahnen 3, deren Werkstoff eine höhere Schmelztemperatur aufweist, jedoch nicht.

Nachdem das thermoplastische Material 2 aufgeschmolzen ist, wird es durch den aufgebrachten Druck verformt, sodass die Schmelzen der mehreren Lagen zumindest teilweise ineinander übergehen. Das Aufschmelzen des thermoplastischen Materials 2 erfolgt insbesondere in einem Temperaturbereich zwischen 160°C und 180°C. Alternativ zu den dargestellten Heizplatten 6 kann auch um die Anordnung eine Edelstahlfolie als Heizmittel angelegt werden.

In der Figur 2 ist das Transport-/Antriebsband 1 aus Figur 1 nach dem Umformvorgang mit wiedererstarrten thermoplastischen Material 2 dargestellt. In der Figur 2 ist deutlich zu erkennen, dass der erfindungsgemäß vorgenommene Umformvorgang keinen wesentlichen Einfluss auf die Gewebebahnen 3 ausübt. Ebenfalls deutlich zu erkennen ist aber an der bearbeiteten Kante des Transport-/Antriebsbandes 1, dass das ursprünglich in mehreren Lagen vorhandene thermoplastische Material 2 nach dem Umformvorgang eine Einheit mit einer abgerundeten Kante bildet.

Zur Verdeutlichung wird in den Figuren 1 und 2 nur die jeweils links dargestellte Längskante bearbeitet und umgeformt. Die jeweils rechts eingezeichnete Längskante verbleibt unverändert und die jeweils getrennten Lagen der unterschiedlichen Materialien sind deutlich zu erkennen. Für den Einsatz des Transport-/Antriebsbandes ist es allerdings bevorzugt vorgesehen, dass beide Längskanten entsprechend umgeformt und versiegelt werden.

## Patentansprüche

1. Verfahren zum Herstellen eines Transport-/Antriebsbandes (1) aus zumindest einer Lage eines thermoplastischen Materials (2) und zumindest einer Lage aus einer Gewebebahn (3), **dadurch gekennzeichnet, dass** an zumindest einer Längskante des Transport-/Antriebsbandes (1) eine Matte (4) angelegt wird, um Wärme und/oder Druck auf das Transport-/Antriebsband (1) zu übertragen, sodass ausschließlich das thermoplastische Material (2) des Transport-/Antriebsbandes (1) ohne Zusatzmaterial zumindest bereichsweise aufgeschmolzen und umgeformt wird, und anschließend nach einem Wiedererstarren des thermoplastischen Materials (2) die Matte (4) von der Längskante des Transport-/Antriebsbandes (1) gelöst wird.

2. Verfahren nach Anspruch 1, **dadurch gekennzeichnet, dass** die Schmelztemperatur des Materials der Gewebebahn (3) höher als die Schmelztemperatur thermoplastischen Materials (2) ist.

3. Verfahren nach Anspruch 1 oder 2, **dadurch gekennzeichnet, dass** das Aufschmelzen und Umformen des thermoplastischen Materials (2) in einem Temperaturbereich zwischen 120°C und 200°C erfolgt.

4. Verfahren nach zumindest einem der vorhergehenden Ansprüche, **dadurch gekennzeichnet, dass** das Aufschmelzen und Umformen des thermoplastischen Materials (2) in einem Temperaturbereich zwischen 160°C und 180°C erfolgt.

5. Verfahren nach zumindest einem der vorhergehenden Ansprüche, **dadurch gekennzeichnet, dass** zwischen dem Transport-/Antriebsband (1) und der Matte (4) ein Trennmedium, insbesondere ein Trennpapier (5) vorgesehen wird.

6. Verfahren nach Anspruch 5, **dadurch gekennzeichnet, dass** das Trennmedium mit einer Oberflächenstruktur versehen wird, die beim Aufschmelzen und Umformen der Oberfläche des thermoplastischen Materials (2) aufgeprägt wird.

7. Verfahren nach zumindest einem der vorhergehenden Ansprüche, **dadurch gekennzeichnet, dass** die Matte (4) als Glasfasermatte ausgebildet ist.

8. Verfahren nach zumindest einem der vorhergehenden Ansprüche, **dadurch gekennzeichnet, dass** die Matte (4) ein antihaftbeschichtetes Gewebe aufweist.

## Claims

1. Method for producing a transport/drive belt (1), comprising at least one layer of a thermoplastic material (2) and at least one layer of a woven fabric web (3), **characterized in that** a mat (4) is placed on at least one longitudinal edge of the transport/drive belt (1) in order to transfer heat and/or pressure to the transport/drive belt (1) such that exclusively the thermoplastic material (2) of the transport/drive belt (1) is melted and thermoformed, at least in certain regions, without additional material and, subsequently, after the thermoplastic material (2) has solidified again, the mat (4) is detached from the longitudinal edge of the transport/drive belt (1).

2. Method according to Claim 1, **characterized in that** the melting temperature of the material of the woven fabric web (3) is higher than the melting temperature of the thermoplastic material (2).

3. Method according to Claim 1 or 2, **characterized in that** the melting and thermoforming of the thermoplastic material (2) takes place in a temperature range between 120°C and 200°C.

4. Method according to at least one of the preceding claims, **characterized in that** the melting and thermoforming of the thermoplastic material (2) takes place in a temperature range between 160°C and 180°C.

5. Method according to at least one of the preceding claims, **characterized in that** a separating medium, in particular a separating paper (5), is provided between the transport/drive belt (1) and the mat (4).

6. Method according to Claim 5, **characterized in that** the separating medium is provided with a surface structure which is impressed on the surface of the thermoplastic material (2) during the melting and thermoforming.

7. Method according to at least one of the preceding claims, **characterized in that** the mat (4) is formed as a glass fibre mat.

8. Method according to at least one of the preceding claims, **characterized in that** the mat (4) comprises a woven fabric with a nonstick coating.

## Revendications

1. Procédé de fabrication d'une bande de transport et d'entraînement (1) constitué d'au moins une couche de matériau thermoplastique (2) et d'au moins une couche de nappe tissu (3),
**caractérisé en ce que**
un mat (4) qui transfère la chaleur et/ou la poussée sur la bande de transport ou d'entraînement (1) est posé sur au moins un bord longitudinal de la bande de transport ou d'entraînement (1), de sorte que seul le matériau thermoplastique (2) de la bande de transport et d'entraînement (1) est fondu et déformé au moins en partie sans apport de matériau supplémentaire, le mat (4) étant détaché du bord longitudinal de la bande de transport ou d'entraînement (1) après la resolidification du matériau thermoplastique (2).

2. Procédé selon la revendication 1, **caractérisé en ce que** la température de fusion du matériau de la bande de tissu (3) est supérieure à la température de fusion du matériau thermoplastique (2).

3. Procédé selon les revendications 1 ou 2, **caractérisé en ce que** la fusion et la déformation du matériau thermoplastique (2) ont lieu dans une plage de température comprise entre 120°C et 200°C.

4. Procédé selon au moins l'une des revendications précédentes, **caractérisé en ce que** la fusion et la déformation du matériau thermoplastique (2) ont lieu dans une plage de température comprise entre 160°C et 180°C.

5. Procédé selon au moins l'une des revendications précédentes, **caractérisé en ce qu'**un moyen de séparation, en particulier un papier de séparation (5), est prévu entre la bande de transport ou d'entraînement (1) et le mat (4).

6. Procédé selon la revendication 5, **caractérisé en ce que** le moyen de séparation est doté d'une structure de surface qui s'imprime sur la surface du matériau thermoplastique (2) lors de sa fusion et de sa déformation.

7. Procédé selon au moins l'une des revendications précédentes, **caractérisé en ce que** le mat (4) est configuré comme mat de fibres de verre.

8. Procédé selon au moins l'une des revendications précédentes, **caractérisé en ce que** le mat (4) présente un tissu doté d'un revêtement antiadhésif.
